Europäisches Patentamt

European Patent Office

Office européen des brevets

(19)

(11) Veröffentlichungsnummer: **0 070 034**
**B1**

(12)

# EUROPÄISCHE PATENTSCHRIFT

(45) Veröffentlichungstag der Patentschrift:
25.09.85

(51) Int. Cl.⁴: **B 60 R 1/08**

(21) Anmeldenummer: **82106305.4**

(22) Anmeldetag: **14.07.82**

(54) **Abblendbarer Rückblickspiegel insbesondere für Kraftfahrzeuge.**

(30) Priorität: **14.07.81 DE 3127720**

(43) Veröffentlichungstag der Anmeldung:
**19.01.83 Patentblatt 83/3**

(45) Bekanntmachung des Hinweises auf die Patenterteilung:
**25.09.85 Patentblatt 85/39**

(84) Benannte Vertragsstaaten:
**AT DE FR GB IT NL SE**

(56) Entgegenhaltungen:
**DE - A - 2 332 189**
**DE - A - 2 416 172**
**DE - A - 2 732 727**
**DE - A - 2 735 195**
**DE - U - 7 801 893**
**DE - U - 7 924 246**

(73) Patentinhaber: **HOHE KG, Hauptstrasse 36,
D-6981 Collenberg (DE)**

(72) Erfinder: **Kaspar, Rudolf, Ringstrasse 30,
D-6981 Collenberg (DE)**

(74) Vertreter: **Zinngrebe, Horst, Dr.rer.nat., Patentanwälte
Dipl.-Ing. G. Schliebs Dr.rer.nat. Horst Zinngrebe
Claudiusweg 17 A, D-6100 Darmstadt (DE)**

**Beschreibung**

Die Erfindung betrifft einen abblendbaren Rückblickspiegel für Kraftfahrzeuge, vor dessen Spiegelfläche wenigstens eine Flüssigkristallzelle angeordnet ist, wobei in einem Stromversorgungskreis für die Flüssigkristallzelle eine Steuereinrichtung für die an die Elektroden der Flüssigkristallzelle angelegte Spannung sowie eine Wechselstromquelle geschaltet sind, die Steuereinrichtung einen an der Spiegelfläche im auftreffenden Licht angeordneten lichtempfindlichen Widerstand sowie eine Kippstufe aufweist, deren Steuereingang an den Widerstand angeschlossen und deren Ausgangssignale einem Steueranschluss der Wechselstromquelle zugeführt sind.

Der aus der DE-U-7 924 246 bekannte abblendbare Rückspiegel dient als Fahrzeug-Innenspiegel. Die Steuereinrichtung besteht in einem für den Fahrer zugänglichen, am Armaturenbrett des Fahrzeuges untergebrachten Ein-/Ausschalter. Je nach Stellung des Schalters wird durch Anlegen einer Wechselspannung an die Elektroden der Flüssigkristallzelle diese abgedunkelt oder aufgehellt, was der Abblendstellung bzw. der Normalstellung des Rückblickspiegels entspricht. Vor der Flüssigkristallzelle ist ein Polarisator angeordnet, der üblicherweise als Folie auf das äussere Deckglas aufgebracht wird.

An dieser Vorrichtung ist nachteilig, dass für den Wechsel von der Normalstellung in die Abblendstellung und umgekehrt die Aufmerksamkeit des Fahrers auf das Betätigen eines Schalters wenigstens teilweise abgelenkt wird.

Aus der deutschen Gebrauchsmusterschrift 7 801 893 ist es bekannt, an der Vorderseite des Spiegelgehäuses eine Photozelle einzubauen, die über einen Verstärker an den Steueranschluss einer Triggerschaltung angeschlossen ist. Die Ausgangssignale der Triggerschaltung steuern eine Wechselstromquelle für die Flüssigkristallzelle.

Demgegenüber liegt der Erfindung die Aufgabe zugrunde, einen Rückspiegel der eingangs genannten Art zu schaffen, bei dem eine unnötige Abblendung unterbleibt, wenn eine Blendung beispielsweise bei Nacht durch von rückwärts kommenden oder über eine Bodenwelle fahrenden Fahrzeugen nur kurzzeitig erfolgt.

Dazu ist erfindungsgemäss an dem eingangs genannten abblendbaren Rückblickspiegel vorgesehen, dass die Kippstufe mit einer Verzögerungseinrichtung zum verzögerten Umschalten ausgerüstet ist.

Die Verwendung des erfindungsgemässen Spiegels als Kraftfahrzeug-Aussenspiegel wird dadurch erleichtert, dass in die die Ausgangssignale führende Ausgangsleitung der Kippstufe eine Umkehrstufe zur Anpassung der Wechselstromsignale aus der Wechselstromquelle an eine elektrisch abdunkelbare Flüssigkristallzelle geschaltet ist, die auf die Spiegelfläche aufgebracht ist. Ein äusserer Polarisator gemäss der erwähnten Gebrauchsmusterschrift kann damit entfallen, so dass der so ausgestaltete Spiegel den Vorzug besonderer Kratzfestigkeit besitzt.

In besonders zweckmässiger Ausführung der Erfindung sind zwei Flüssigkristallzellen vorgesehen, von denen jede einen Teil des einfallenden Lichts bei einem bestimmten Spannungszustand ihrer Elektroden polarisiert und die Flüssigkristallzellen hintereinander vor der Reflexschicht des Spiegels befestigt sind. Die beiden Flüssigkristallzellen können dabei zweckmässig so ausgestaltet sein, dass sie das ankommende Licht jeweils gleichsinnig linear polarisieren.

Die Erfindung wird nachstehend anhand des in den beigefügten Zeichnungen beschriebenen Ausführungsbeispiels im einzelnen beschrieben. Es zeigen:

Fig. 1 eine schematische Draufsicht auf einen Kraftfahrzeugaussenspiegel in Blickrichtung;

Fig. 2 einen Querschnitt durch den Spiegel nach Fig. 1 längs der Linie II-II;

Fig. 3 ein schematisches Schaltungsdiagramm des Stromversorgungskreises für den Spiegel nach Fig. 1; und

Fig. 4 eine vergrösserte Darstellung des Aufbaus des Spiegels nach Fig. 2.

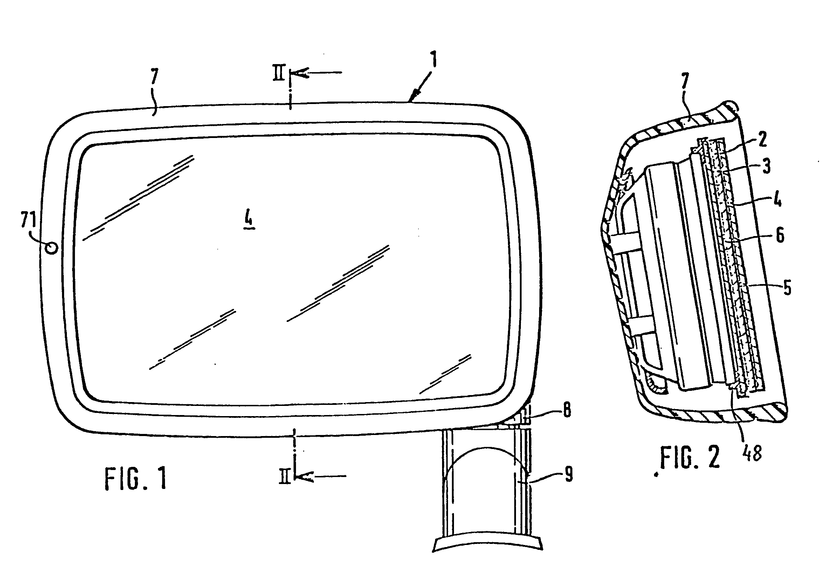

Der in den Fig. 1 und 2 dargestellte Rückblickspiegel ist ein Aussenspiegel für ein Kraftfahrzeug und besteht aus einem im Ganzen mit 1 bezeichneten Gehäuse, das über einen Fuss 9 und ein Gelenk 8 in üblicher Weise an der Karosserie des Fahrzeugs schwenkbar befestigt ist. Das Gehäuse 1 umschliesst einen im Gehäuse gelagerten Spiegel, dessen Spiegelfläche 2 durch die Öffnung des Gehäuses 1 von aussen sichtbar ist.

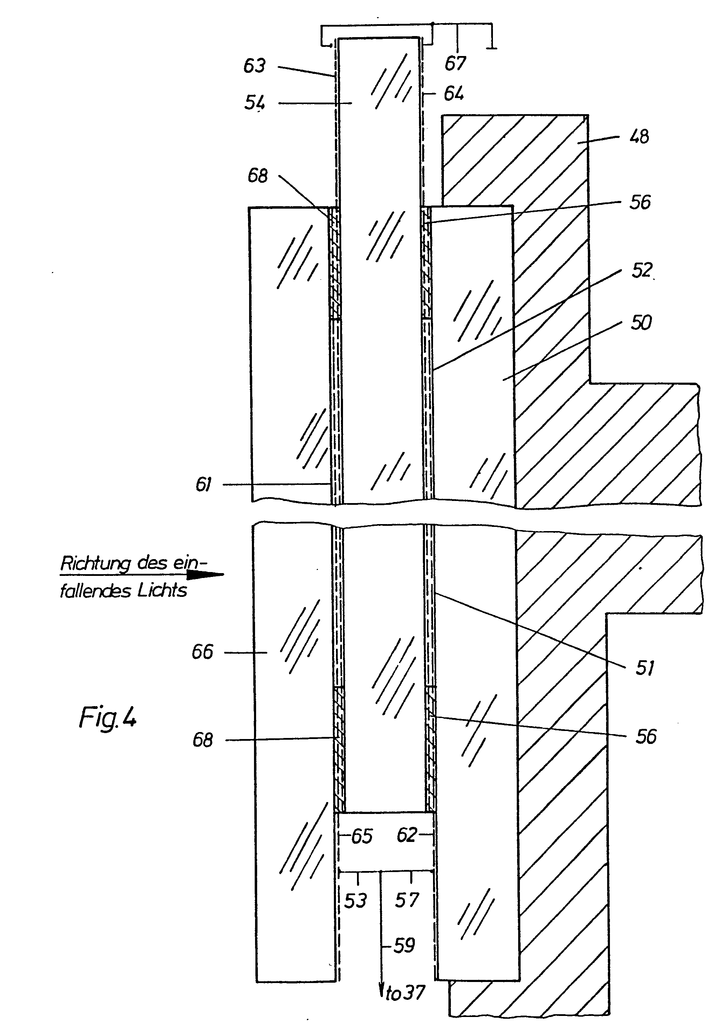

Der Spiegel (Fig. 4) weist eine an einem Tragring 48 (Fig. 2 und 4) befestigte Tragplatte 50 aus Glas auf. Die Vorderfläche der Tragplatte 50 ist mit einer lichtreflektierenden Schicht 52 vorzugsweise aus Metall belegt. Eine Zwischenplatte 54 aus Glas, in Fig. 2 mit 3 bezeichnet, ist mit der beschichteten Vorderfläche der Tragplatte 50 über eine Dichtung 56 verklebt, welche sich längs des Randes der Tragplatte 50 erstreckt. Auf diese Weise wird zwischen der Tragplatte 50 und der Zwischenplatte 54 und der Dichtung 56 ein Zwischenraum definiert, der mit einer Flüssigkristall-Zusammensetzung ausgefüllt ist. Ein Netz von ersten elektrischen Leitern 62 ist auf die Reflex-Beschichtung 52 aufgedruckt, und ein Netz aus zweiten elektrischen Leitern 64 ist auf die den Zwischenraum begrenzende Oberfläche der Zwischenplatte 54 aufgedruckt. Auf diese Weise ist eine erste Flüssigkristallzelle 51 geschaffen, die in Fig. 2 mit 6 bezeichnet ist.

In ähnlicher Weise ist in einem Zwischenraum, der durch die Vorderfläche der Zwischenplatte 54 und eine Frontplatte 66 aus Glas, in Fig. 2 mit 4 bezeichnet, sowie eine Dichtung 68, die längs des Randes der Vorderplatte 66 aufgebracht ist und die Vorderplatte 66 mit der Zwischenplatte 54 verklebt, ein Zwischenraum definiert, in welchem eine zweite Flüssigkristallzelle 61 ausgebildet ist. Ein Netzwerk dritter elektrischer Leiter 63 sowie ein Netzwerk vierter elektrischer Leiter 65 ist auf die Vorderfläche der Zwischenplatte 54 bzw. die in den Zwischenraum weisende Rückfläche der Vorderplatte 66 aufgebracht. Gemäss Fig. 4 ist die Zwischenplatte 54 relativ zur Tragplatte 50 und Vorderplatte 66 etwas seitlich versetzt, so dass die Enden der Leiter 62, 65 bzw. 63, 64 zum Anbringen von elektrischen Anschlüssen freiliegen. Beide Flüssigkristall-Zusammensetzungen enthalten einen dichromatischen Farbstoff, wie er etwa von der Firma E. Merck, Darmstadt, im Handel erhältlich ist. Die Platten 50, 54 und 66 können eine Stärke von etwa 1 mm haben, während die Flüssigkristallzellen 51 und 61 nur etwa 10 μm stark sind. Die vordere Flüssigkristallzelle ist in Fig. 2 mit 5 und in Fig. 4 mit 61 bezeichnet.

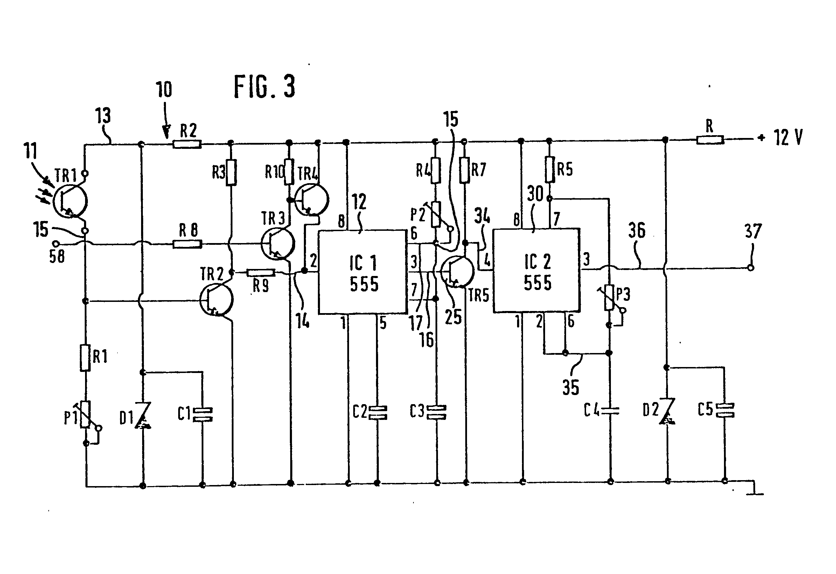

Im verbreiterten Randwulst 7 des Gehäuses 1 ist eine kleine Bohrung 71 vorgesehen, in welche ein Fototransistor, der in Fig. 3 schematisch dargestellte Transistor 11, eingesetzt ist. Die lichtempfindliche Elektrode (Basis) des Fototransistors 11 wird von dem auf die Bohrung 71 auftreffenden Licht bestrahlt. Die Bohrung 71 ist gemäss Fig. 1 in dem vom Spiegelfuss 9 entfernten Abschnitt des Gehäusewulstes 7 angeordnet, kann jedoch auch an anderer Stelle des Randwulstes 7 vorgesehen sein. Die Zuleitungen 13 und 15 zum Kollektor und Emitter des Fototransistors 11 sind von der Einbaustelle an der Bohrung 71 im Spiegelgehäuse 1 an verdeckter Stelle durch den Spiegelfuss 9 in das Innere des Fahrzeugs geführt, was in den Fig. 1 und 2 jedoch nicht gesondert dargestellt ist.

Gemäss Fig. 3 enthält der an eine Gleichstromquelle von beispielsweise 12 Volt Ausgangsspannung (entsprechend der Batterie des Kraftfahrzeugs) angeschlossene Stromversorgungskreis 10 eine Reihenschaltung aus dem Kollektor und Emitter des Fototransistors 11 und eine Stelleinrichtung in Form eines Potentiometers P 1, dessen Funktion noch beschrieben wird. Je nach Lichteinfall auf die Basis des Fototransistors 11 ändert sich in bekannter Weise sein Durchlasswiderstand zwischen Kollektor und Emitter. Die Spannung, die am Potentiometer P 1 und einem Vorwiderstand R 1 abfällt, wird am Steuereingang 14 einer Kippstufe 12 über eine verstärkende Transistorstufe Tr 2 zugeführt. Steigt die Spannung am Steuereingang 14 über einen durch die Kenndaten der Kippstufe 12 bestimmten Wert (Schwellwert), nimmt das Ausgangssignal auf der Ausgangsleitung 16 der Kippstufe 12 eine bestimmte Höhe an, und unterschreitet diese, wenn die Spannung am Steuereingang 14 unter den Schwellwert absinkt. Die Kippstufe 12 kann, wie dargestellt, ein IC-Chip 555 sein.

Das Ausgangssignal auf der Ausgangsleitung 16 wird in einer Umkehrstufe Tr 5, die einen Transistor 25 enthält, invertiert, und das invertierte Signal wird dem Steuereingang 34 eines Rechteckgenerators 30 zugeführt, der mit dem Kollektor des Transistors 25 verbunden ist. Der Rechteckgenerator 30 gibt auf die Ausgangsleitung 36 kontinuierlich Rechteckimpulse in einer für die Flüssigkristallzelle geeigneten Frequenz, wenn die Eingangsspannung am Steueranschluss 34 einen durch die Kenndaten des Rechteckgenerators 30 bestimmten Wert annimmt. Die Frequenz kann im Bereich von 30 ... 10.000 Hz liegen. Wenn die Grösse des Steuersignals am Steueranschluss 34 ausserhalb des Betriebsbereichs des Rechteckgenerators 30 liegt, treten auf der Ausgangsleitung 36 keine Rechteckimpulse auf. Der Ausgangsanschluss 37 der Ausgangsleitung 36 ist mit der Leitung 59 (Fig. 4) verbunden, von der die Leitungen 53 und 57 abzweigen. Leitung 53 ist mit dem freiliegenden Teil des vierten Leiters 65 und Leitung 57 ist mit dem freiliegenden Teil des ersten Leiters 62 verbunden. Wie dargestellt, sind das Potentiometer P 1 und verschiedene Schaltungselemente der Stromversorgungsschaltung mit dem gleichen Bezugspotential (Masse des Fahrzeugs oder Erde) verbunden ebenso wie die Leiter 63 und 64 der Flüssigkristallzellen 61 und 51 über Leitung 67 (Fig. 4). Jede der beiden Flüssigkristallzellen 61 und 51 enthält einen Stoff, der etwa 50% des einfallenden Lichts in ein linear polarisiertes Licht polarisiert, wenn eine Wechselspannung geeigneter Frequenz, wie beispielsweise die Rechteckimpulse auf der Ausgangsleitung 36, an die Leiter 63, 65 bzw. 62, 64 nicht angelegt wird. Wenn dagegen die Wechselspannung an die Leiter 63, 65 und 62, 64 angelegt wird, übt der in den Flüssigkristallzellen 61 und 51 enthaltene Stoff keine Polarisationswirkung aus. Die Richtungen der linearen Polarisation, die durch die Flüssigkristallzellen 61 und 51 erzeugt wird, sind gleich. Wenn daher keine Wechselspannung an die Flüssigkristallzelle 51 und an die Flüssigkristallzelle 61 angelegt wird, wird daher praktisch das gesamte auf die Reflexschicht 52 auffallende Licht linear polarisiert. Nach der Reflexion, die einen Phasensprung von 180° der elektrischen Welle des Lichts bewirkt, löscht das reflektierte Licht das auf die Reflexschicht 52 auftreffende Licht aus. Wenn dagegen eine Wechselspannung an die Flüssigkristallzelle 51 oder alternativ nur an die Flüssigkristallzelle 61 angelegt wird, wird nur etwa die Hälfte der Lichtintensität nach Reflexion an der Reflexschicht 52 ausgelöscht, wohingegen alles einfallende Licht von der Reflexschicht 52 reflektiert wird, wenn besagte Wechselspannung an beide Flüssigkristallzellen 61 und 51 angelegt wird. Somit kann die Helligkeit des im Spiegel betrachteten Bildes von nahezu Dunkelheit bis auf volle Reflexion durch entsprechendes Anlegen der Wechselspannung an die Flüssigkristallzellen bzw. deren Leiter gesteuert werden. Bei der in Fig. 4 dargestellten Ausführungsform der Erfindung sind die Flüssigkristallzellen 51 und 61 elektrisch parallel geschaltet und ihre polarisierende Wirkung wird durch den Widerstand des Fototransistors 11 gesteuert, der entsprechend dem von seiner Basis aufgenommenen Lichtstrom in seiner Grösse variiert. Der Rechteckgenerator 30 kann ein IC-Chip 555 sein, wie in Fig. 4 dargestellt ist.

Die Frequenz des Ausgangssignals auf der Ausgangsleitung 36 kann durch ein RC-Glied, bestehend aus einem Potentiometer P 3 und einem Kondensator C 4, verändert werden, wenn der Verknüpfungspunkt zwischen Potentiometer P 3 und Kondensator C 4 über eine Leitung 35 mit einer weiteren Anschlussklemme des Rechteckgenerators 30 verbunden ist und der Abgriff des Potentiometers P 3 entsprechend verstellt wird.

Bei einem Blendungsfall kommt es häufig vor, dass der Rückspiegel und damit der Fototransistor 11 kurzzeitig nicht beleuchtet werden, etwa wenn ein nachfolgendes Fahrzeug über eine Bodenwelle fährt. Damit die Steuerwirkung der Flüssigkristallzellen durch eine derartig kurzzeitige Unterbrechung der Beleuchtung nicht beeinflusst wird, ist der Versorgungsstromkreis 10 mit einer Verzögerungseinrichtung, bestehend aus Potentiometer P 2 und einem mit diesem in Reihe geschalteten (Lade)Kondensator C 3 ausgerüstet, der in Reihe mit einem Widerstand R 4 geschaltet ist. Der Verbindungspunkt 15 von Potentiometer P 2 und Kondensator C 3 ist mit einem Verzögerungsanschluss 17 der Kippstufe 12 gekoppelt. Aufgrund dieser Verzögerungseinrichtung folgt das Ausgangssignal der Kippstufe 12 auf der Ausgangsleitung 16 der Steuerspannung am Steueranschluss 14 der Kippstufe 12 zeitlich verzögert, wobei das Ausmass der zeitlichen Verzögerung durch Einstellung des Abgriffs am Potentiometer P 2 geeignet gewählt werden kann.

Das mit dem Fototransistor 11 in Reihe geschaltete Potentiometer P 1 gestattet eine Einstellung der Ansprechschwelle der Kippstufe 12 durch geeignete Einstellung des Abgriffs am Potentiometer P 1. Es kann damit erreicht werden, dass bei sehr grosser Umgebungshelligkeit die Kippstufe 12 auf eine höhere Steuerspannung am Steuereingang 14 anspricht als bei einer anderen Einstellung des Potentiometers 1.

Die beschriebene Stromversorgungsschaltung 10 kann auch zum Betrieb einer Flüssigkeitszelle, die nur bei angelegter Wechselspannung linear polarisiert, verwendet werden, wenn die Umkehrstufe 25 weggelassen und die Ausgangsleitung 16 direkt mit dem Steueranschluss 34 verbunden wird.

## Patentansprüche

1. Abblendbarer Rückblickspiegel, insbesondere für Kraftfahrzeuge, von dessen Spiegelfläche (2) wenigstens eine Flüssigkristallzelle (51) angeordnet ist, wobei in einem Stromversorgungskreis für die Flüssigkristallzelle eine Steuereinrichtung (10) für die an die Elektroden (62, 64) der Flüssigkristallzelle (2) angelegte Spannung sowie eine Wechselstromquelle (30) geschaltet sind, die Steuereinrichtung (10) einen an der Spiegelfläche (2) im auftreffenden Licht angeordneten lichtempfindlichen Widerstand (11) sowie eine Kippstufe (12) aufweist, deren Steuereingang (14) an den Widerstand (11) angeschlossen .und deren Ausgangssignale einem Steueranschluss (34) der Wechselstromquelle (30) zugeführt sind, dadurch gekennzeichnet, dass die Kippstufe (12) mit einer Verzögerungseinrichtung (P 2, C 3) zum verzögerten Umschalten ausgerüstet ist.

2. Spiegel nach Anspruch 1, dadurch gekennzeichnet, dass die Kippstufe (12) und die Wechselstromquelle (13) IC-Bausteine sind.

3. Spiegel nach Anspruch 1 oder 2, dadurch gekennzeichnet, dass in die die Ausgangssignale führende Ausgangsleitung (16) der Kippstufe (12) eine Umkehrstufe (25) zur Anpassung der Wechselstromsignale aus der Wechselstromquelle (30) an eine elektrische abdunkelbare Flüssigkristallzelle (61, 51) geschaltet ist, die auf der Spiegelfläche (2) befestigt und nach aussen mit einer Glasplatte (66) abgeschlossen ist.

4. Spiegel nach einem der vorhergehenden Ansprüche, dadurch gekennzeichnet, dass zwei Flüssigkristallzellen (51, 61), von denen jede einen Teil des einfallenden Lichts bei einem bestimmten Spannungszustand ihrer Elektroden (Leiter 62, 64; 63, 65) polarisiert, hintereinander vor der Reflexschicht (52) des Spiegels befestigt sind.

5. Spiegel nach Anspruch 4, dadurch gekennzeichnet, dass die beiden Flüssigkristallzellen (51, 61) das ankommende Licht jeweils gleichsinnig linear polarisieren.

6. Spiegel nach Anspruch 4 oder 5, dadurch gekennzeichnet, dass die Flüssigkristallzellen (51, 61) jeweils eine Dicke von etwa 10 $\mu$m haben.

## Revendications

1. Rétroviseur à deux positions notamment pour automobiles, devant la surface de miroir (2) duquel est placée au moins une cellule à cristaux liquides (51), dans lequel est prévu dans un circuit d'alimentation en courant électrique destiné à la cellule à cristaux liquides, un dispositif de commande (10) destiné à la tension appliquée aux électrodes (62, 64) de la cellule à cristaux liquides (2) ainsi qu'une source de courant alternatif (30), ledit dispositif de commande (10) comportant une résistance photosensible (11) placée sur la surface de miroir (2) à la lumière ambiante ainsi qu'un étage à bascule (12) dont l'entrée de commande (14) est reliée à la résistance (11) et dont les signaux de sortie sont envoyés à une borne de commande (34) de la source de courant alternatif, caractérisé en ce que l'étage à bascule (12) est équipé d'un dispositif de temporisation (P 2, C 3) réalisant une commutation retardée.

2. Rétroviseur conforme à la revendication 1, caractérisé en ce que l'étage (12) et la source de courant alternatif (13) sont des composants à circuits intégrés.

3. Rétroviseur conforme à la revendication 1 ou 2, caractérisé en ce que, sur la ligne de sortie (16) de l'étage à bascule (12) chargée de transmettre les signaux de sortie, est prévu un étage inverseur (25) permettant d'adapter les signaux de courant alternatif délivrés par la source de courant alternatif (30) à une cellule électrique à cristaux liquides pouvant opacifier (61, 51) qui est fixée sur la surface de miroir (2) et qui est isolé de l'extérieur par une plaque en verre (66).

4. Rétroviseur conforme à l'une quelconque des revendications précédentes, caractérisé en ce que deux cellules à cristaux liquides (51, 61), dont chacune polarise une partie de la lumière incidente pour un état de tension donné de leurs électrodes (conducteurs 62, 64; 63, 65), sont fixées l'une derrière l'autre devant la couche réfléchissante (52) du miroir.

5. Rétroviseur conforme à la revendication 4, caractérisé en ce que les deux cellules à cristaux liquides (51, 61) réalisent toutes deux une polarisation linéaire de même sens de la lumière incidente.

6. Rétroviseur conforme aux revendications 4 ou 5, caractérisé en ce que les cellules à cristaux liquides (51, 61) présentent chacune une épaisseur d'environ 10 $\mu$m.

## Claims

1. Non-dazzling rear-view mirror, particularly for motor vehicles, wherein at least one liquid crystal cell (51) is situated in front of its mirror surface (2), a control device (10) for the voltage applied to the electrodes (62, 64), of the liquid crystal cell (2) and an AC source (30) are incorporated in a power-supply circuit for the liquid crystal cell, the control device (10) having a light-sensitive resistor (11), situated on the mirror surface (2) in the incoming light, and a trigger stage (12) the control inlet (14) of which is connected to the resistor (11) and the outlet signals of which are fed to the control connector (34) of the AC source (30) characterized in that the trigger stage (12) is provided with a delay means (P2, C3) for delayed switching.

2. A mirror according to claim 1, characterized in that the trigger stage (12) and the AC source (13) are units of an integrated circuit.

3. A mirror according to claim 1 or 2, characterized in that into outlet (16) of the trigger stage (12), which outlet serves to lead the outlet signals, is connected an inversing stage (25) for the adaptation of the AC signals from the AC source (30) to an electrically darkenable liquid crystal cell (61, 51), which is fixed on the mirror surface (2) and is outwardly closed by a glass plate (66).

4. A mirror according to one of the preceding claims, characterized in that two liquid crystal cells (51, 61) are fixed, one behind the other before the reflex layer (52) of the mirror, each of the cells serving to polarize a part of the incoming light at a certain voltage condition of its electrodes (conductors 62, 64; 63, 65).

5. A mirror according to claim 4, characterized in that the two liquid crystal cells (51, 61) linearly polarize the incoming light always in the same sense.

6. A mirror according to claim 4 or 5, characterized in that each of the liquid crystal cells (51, 61) has a thickness of about 10 $\mu$m.

FIG. 1

FIG. 2

FIG. 3

+ 12 V

R

37

36

35

P3

C4

C5

D2

R5

7

30

3

6

IC 2
555

8

2

1

R7

34

4

TR5

25

15

R4

P2

6

3

7

17

16

C3

IC 1
555

12

8

5

1

C2

TR4

2

14

R10

TR3

R9

R3

TR2

10

R2

R8

C1

D1

13

TR1

11

15

58

R1

P1

63
54
68
61

67
64
48
56
52
50

Richtung des einfallendes Lichts

66
68

51
56

Fig. 4

65    62
53    57

59
to 37